# FASCICULE DE BREVET EUROPEEN

(11) **EP 3 784 492 B1**
(45) Date de publication et mention de la délivrance du brevet: **28.05.2025**
(21) Numéro de dépôt: 19728475.5
(22) Date de dépôt: 19.04.2019
(51) Int. Cl.: B29C 64/268, B33Y 10/00, B22F 3/105, B33Y 30/00, B29C 64/153, B23K 26/354, G02B 26/10, B22F 10/28, B22F 12/44, B22F 12/49, B22F 10/36

(54) **APPAREIL ET PROCÉDÉ POUR FABRIQUER UN OBJET TRIDIMENSIONNEL**
VORRICHTUNG UND VERFAHREN ZUR HERSTELLUNG EINES DREIDIMENSIONALEN OBJEKTS
APPARATUS AND METHOD FOR MANUFACTURING A THREE-DIMENSIONAL OBJECT

(30) Priorité: 23.04.2018 FR 1853547
(43) Date de publication de la demande: 03.03.2021
(73) Titulaire: AddUp, 63118 Cébazat (FR)
(72) Inventeur: WALRAND, Gilles, 63118 CEBAZAT (FR); DENAVIT, Franck, 63118 CEBAZAT (FR)
(74) Mandataire: Novagraaf Group
(86) Numéro de dépôt international: PCT/FR2019/050942
(87) Numéro de publication internationale: WO 2019/207239

(56) Documents cités:
- US-A- 5 508 489
- US-A1- 2011 299 147
- US-A1- 2017 173 876

## Description

### DOMAINE TECHNIQUE

Il est question du domaine technique de la fabrication additive sélective.

### ETAT DE LA TECHNIQUE

La fabrication additive sélective consiste à réaliser des objets tridimensionnels par consolidation de zones sélectionnées sur des strates successives de matériau pulvérulent (poudre métallique, poudre de céramique, etc.). Les zones consolidées correspondent à des sections successives de l'objet tridimensionnel. La consolidation se fait, couche par couche, par une fusion sélective totale ou partielle réalisée avec une source de consolidation. Cette source est classiquement une source de rayonnement (par exemple d'un faisceau laser de forte puissance) ou encore une source de faisceau de particules (par exemple d'un faisceau d'électrons - technologie dite EBM ou « Electron Beam Melting » selon la terminologie anglo-saxonne généralement utilisée dans le domaine).

Cependant les appareils de fabrication additive classiques ont une productivité aujourd'hui considérée comme insuffisante.

Afin d'augmenter la productivité des appareils de fabrication additive, le nombre de sources laser peut être augmentée. Cependant ceci présente de multiples inconvénients. L'efficacité d'un tel système est limitée. La présence des différentes sources laser pose des problèmes d'encombrement. Par ailleurs, la multiplication des sources laser présente un coût important.

Le document US2017173876A1 divulgue le préambule de la revendication 1.

### PRESENTATION

Un but de l'invention est de pallier au moins un des inconvénients présentés ci-avant.

A cet effet, il est prévu un appareil selon la revendication 1.

L'invention est avantageusement complétée par les caractéristiques définies dans les revendications 2 à 9, prises seules ou en une quelconque de leurs combinaisons techniquement possibles.

L'invention concerne également un procédé selon la revendication 10.

L'invention est avantageusement complétée par les caractéristiques de la revendication 11.

### DESSINS

D'autres objectifs, caractéristiques et avantages apparaitront à la lecture de la description qui suit donnée à titre illustratif et non limitatif en référence aux dessins, parmi lesquels :
- la figure 1 représente schématiquement un appareil selon un exemple de mode de réalisation de l'invention,
- la figure 2 représente une vue en perspective de l'appareil de la figure 1,
- les figures 3a, 3b, 3c, 4a et 4b représentent des motifs de trajectoires selon un exemple de mode de réalisation de l'invention,
- la figure 5 représente un procédé selon un exemple de mode de réalisation de l'invention,

### DESCRIPTION

### Structure générale de l'appareil

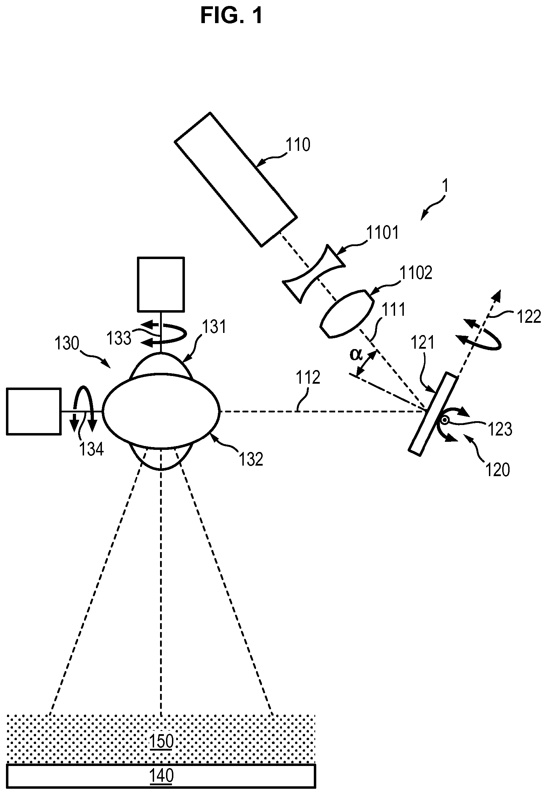

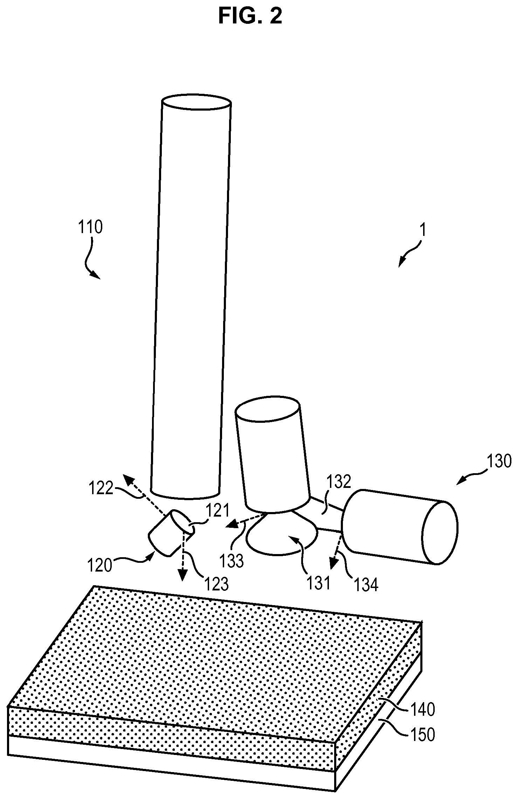

En référence aux figures 1 et 2, il est décrit un appareil 1. L'appareil 1 peut être un appareil 1 pour fabriquer un objet, par exemple par fabrication additive, par exemple par fabrication additive sélective. L'objet peut être un objet tridimensionnel.

L'appareil 1 peut comprendre un support 140. Le support 140 peut être adapté pour supporter au moins une couche 150 de matériau, par exemple de matériau de fabrication additive. La couche 150 de matériau peut être une couche 150 de poudre, par exemple de poudre de fabrication additive.

L'appareil 1 peut comprendre une source 110. La source 110 peut être une source de consolidation. La source 110 peut être une source de rayonnement, par exemple une source laser, par exemple une source lumineuse laser, par exemple adaptée pour émettre un faisceau laser.

L'appareil 1 peut comprendre un dispositif de balayage 130. Le dispositif de balayage peut être adapté pour diriger le faisceau laser, par exemple sur la couche 150, par exemple de sorte à balayer au moins une partie de la couche 150, par exemple selon une trajectoire de balayage.

L'appareil 1 comprend un dispositif 120, par exemple un dispositif de modulation 120, par exemple un dispositif de modulation de trajectoire de balayage. Le dispositif 120 peut être disposé en amont du dispositif de balayage 130. Le dispositif 120 peut comprendre un miroir 121, par exemple un miroir de modulation 121. Le miroir 121 peut être adapté pour réfléchir le faisceau laser issu de la source laser et/ou le diriger vers le dispositif de balayage. L'angle α d'incidence du faisceau laser issu de la source laser sur le miroir 121 est compris entre 20 et 45 °, et/ou l'angle formé entre le faisceau laser issu de la source laser et dirigé vers le dispositif 120 et le faisceau laser issu du dispositif 120 et dirigé vers le dispositif de balayage 130 est compris entre 40 et 90°.

Par angle d'incidence, on entend l'angle entre la direction de propagation du faisceau laser et la normale au miroir au niveau de la surface du miroir rencontrée par le faisceau laser.

Par amont et aval, on entend amont et aval par rapport au sens du flux de photons du faisceau laser émis par la source laser, c'est-à-dire par rapport au chemin optique du faisceau laser. Il est ainsi possible de moduler la trajectoire principale définie par le dispositif de balayage 130 au moyen d'une modulation préalable et d'obtenir une trajectoire modulée.

En effet, la modulation de la trajectoire permet d'améliorer la répartition d'énergie fournie par la source laser, ce qui se traduit par un élargissement du bain de fusion, d'où un cordon de matière fusionnée plus large et une diminution du nombre de vecteurs correspondant aux trajets de laser et par conséquent une augmentation du débit de fusion, c'est-à-dire une plus grande surface fusionnée pour une même unité de temps. Pour obtenir une fusion correcte, un matériau a besoin d'une quantité d'énergie par unité de temps, dite fluence, exprimée par exemple en J/mm². Si la fluence est trop faible, la fusion n'est pas complète et le matériau n'aura pas les caractéristiques escomptées. Si la fluence est trop importante, généralement au centre du spot laser, le bain de fusion sera trop dynamique, ce qui provoquera des phénomènes non désirés tels que des projections, des étincelles, des fumées importantes perturbant le faisceau laser, ou du bullage. De tels phénomènes non désirés dégradent la qualité du matériau obtenu. Ainsi, pour un diamètre de spot laser donné, l'énergie laser et la vitesse de fusion, donc la productivité, sont limitées dans l'art antérieur. L'invention permet d'introduire, grâce à un dispositif de modulation ne nuisant pas à la compacité et à l'efficacité, des modulations permettant de superposer à la trajectoire principale une trajectoire secondaire sur le lit de poudre.

Il est ainsi possible de s'affranchir des limitations propres à un spot laser ponctuel et à une trajectoire rectiligne en introduisant des modulations dans la trajectoire.

L'appareil permet ainsi d'augmenter le rendement du transfert d'énergie à la matière. En effet, la puissance d'un faisceau laser étant fortement localisée, le matériau tel que la poudre fusionne rapidement et le bain fondu résultant agit comme un miroir vis-à-vis des photons. Il en résulte une importante réémission de l'énergie fournie dans ce cadre.

Il est ainsi possible d'obtenir une solution plus efficace tout en restant simple à mettre en œuvre et tout en limitant les coûts associés.

Contrairement à l'ajout de multiples sources laser, il est possible de limiter les coûts liés à la fois à l'obtention des sources laser et à la puissance nécessaire à leur utilisation.

La modulation de la trajectoire permet également une meilleure maîtrise de la dynamique de refroidissement du bain de fusion et permet donc d'améliorer l'état, en particulier l'état métallurgique dans le cas d'un métal, du matériau formé.

La modulation permet encore, par le choix du motif de modulation, de régler la quantité d'énergie déposée sur la largeur du bain de fusion, de sorte à ajuster l'énergie, par exemple entre bords et centre du bain de fusion ou entre un bord, le centre et un autre bord, de sorte à limiter des phénomènes non désirés tels que des projections et/ou des étincelles.

En outre, il est ainsi possible d'obtenir un dispositif efficace et compact de par le choix de l'agencement relatif entre la source, le dispositif de modulation et le dispositif de balayage.

En effet, l'appareil est particulièrement compact par rapport à une solution à plusieurs sources laser. L'agencement revendiqué ne nécessite qu'un laser et est particulièrement compact sans nuire à la qualité en termes de fabrication additive.

En particulier, un tel choix d'angle permet de réduire la zone de réflexion et donc de réduire les dimensions du miroir de modulation et donc son inertie. Il est ainsi possible d'atteindre des fréquences d'oscillation élevées, par exemple supérieures à 1,5 kHz, et donc d'augmenter l'efficacité du dispositif de modulation.

En outre, un tel appareil peut être obtenu en modifiant des appareils existants sans nécessiter de modification profonde du dispositif de balayage, par exemple sans interférer avec le système de pilotage d'actionneurs du dispositif de balayage.

### Source laser

La source laser 110 comprend par exemple un laser fibre, par exemple un laser continu par exemple un laser mono-mode avec une répartition d'énergie gaussienne.

Le faisceau laser peut avoir une puissance supérieure ou égale à 250 W, par exemple supérieure ou égale à 500 W, par exemple inférieure ou égale à 5000 W, par exemple inférieure ou égale à 3000 W, par exemple comprise entre 750 et 2500 W, par exemple égale à 1000 ou 2000 W.

Le faisceau laser peut entrer en contact avec la couche 150 de poudre en formant un spot laser ou spot. Le spot peut avoir un diamètre donné, par exemple supérieur ou égal à 50 ou à 60 µm, par exemple inférieur ou égal à 300 ou à 250 µm, par exemple compris entre 50 et 250 µm, par exemple égal à 70 ou à 150 ou à 250 µm.

Le faisceau laser utilisé présente par exemple une longueur d'onde de 1070 nm.

L'appareil 1 peut comprendre un élément optique 1101 de pilotage de la longueur de focalisation, par exemple une lentille optique de pilotage de la longueur de focalisation, par exemple disposé en sortie de la source laser. L'élément optique de pilotage de la longueur de focalisation peut être déplaçable de sorte à ajuster la longueur de focalisation, par exemple déplaçable de sorte à l'approcher et/ou à l'éloigner de la source laser 110, par exemple déplaçable le long de l'axe formé par le faisceau laser 111 sortant de la source laser.

L'appareil 1 peut comprendre un dispositif de focalisation 1102 entre l'élément optique de pilotage de la longueur de focalisation, par exemple disposé entre la source laser 110 et le dispositif de modulation 120.

L'appareil 1 peut comprendre un dispositif de mise en forme du faisceau laser (« shaping » en terminologie anglo-saxonne), par exemple de sorte à homogénéiser l'énergie apportée sur la surface, par exemple la surface supérieure, de la partie de la couche de poudre balayée, par exemple de sorte à obtenir une répartition d'énergie de type haut-de-forme (« top hat » en terminologie anglo-saxonne) ou de type donut. Le dispositif de mise en forme peut être ou comprendre une lentille diffractive ou un élément réfractif.

### Dispositif de balayage

Le dispositif de balayage 130 peut comprendre un premier miroir de balayage 131 et/ou un deuxième miroir de balayage 132. Le dispositif de balayage 130 peut ainsi être adapté pour modifier l'orientation du premier miroir de balayage 131 et/ou du deuxième miroir de balayage 132 selon un ou plusieurs axe(s) de rotation(s), par exemple sur une plage de valeurs d'angles de balayage. Le dispositif de balayage 130 peut être adapté pour modifier l'orientation du premier miroir de balayage 131 selon un premier axe de rotation de balayage 133, par exemple sur une première plage de valeurs d'angles de balayage. Le dispositif de balayage 130 peut être adapté pour modifier l'orientation du deuxième miroir de balayage 132 selon un deuxième axe de rotation de balayage 134, par exemple sur une deuxième plage de valeurs d'angles de balayage.

Le dispositif de balayage 130 peut être configuré pour modifier l'orientation du premier miroir de balayage 131 selon le premier axe de rotation 133 de balayage et/ou du deuxième miroir de balayage 132 selon le deuxième axe de rotation 134 de balayage, à une vitesse de rotation de balayage.

Le premier miroir de balayage 131 peut être adapté et/ou piloté pour réfléchir le faisceau laser 112 issu du miroir de modulation 121 et le diriger vers le deuxième miroir de balayage 132. Le deuxième miroir de balayage 132 peut être adapté pour réfléchir le faisceau laser issu du premier miroir de balayage 131 et le diriger sur la couche 150. Le système peut être adapté pour contrôler l'orientation du premier miroir de balayage 131 selon le premier axe de rotation de balayage 133 et du deuxième miroir 132 selon le deuxième axe de rotation de balayage 134 pour contrôler la trajectoire de balayage de la couche 150 par le faisceau laser selon deux degrés de liberté, par exemple dans un plan de la couche de poudre, par exemple selon deux directions du plan de la couche de poudre. Le plan de la couche de poudre peut être un plan correspondant à une surface, par exemple une surface supérieure, de la couche de poudre.

Le dispositif de balayage 130 peut comprendre au moins un actionneur, par exemple pour modifier l'orientation du premier miroir de balayage 131 et/ou du deuxième miroir de balayage 132. Le dispositif de balayage 130 peut ainsi comprendre un premier actionneur pour modifier l'orientation du premier miroir de balayage 131 selon le premier axe de rotation de balayage 133 et un deuxième actionneur pour modifier l'orientation du deuxième miroir de balayage 132 selon le deuxième axe de rotation 134.

Le premier miroir de balayage 131 et/ou le deuxième miroir de balayage 132 peut être un miroir plan, et/ou un miroir de forme, par exemple de forme de découpe, elliptique, ou rectangulaire, par exemple carré, ou circulaire.

Le dispositif de balayage 130 peut être adapté pour imposer au faisceau laser, ou diriger le faisceau laser selon, une trajectoire de balayage ou trajectoire principale au niveau d'au moins une partie de la couche 150 de poudre de fabrication additive. La trajectoire de balayage ou trajectoire principale correspond à la trajectoire qui serait suivie par le faisceau laser en l'absence de modulation par le dispositif de modulation 120. Elle correspond donc à un certain contrôle du dispositif de balayage 130. La trajectoire définitive dépend donc de la trajectoire principale et de la trajectoire secondaire telle que décrite ci-après.

La trajectoire principale peut comprendre une ou plusieurs section(s), par exemple rectilignes. La ou les section(s) correspond(ent) à des portions de trajectoire où le faisceau attendrait effectivement la couche 150 de poudre en l'absence de modulation, formant ainsi le spot suivant les sections. Les sections forment par exemple des vecteurs.

La trajectoire peut comprendre un ou plusieurs saut(s) séparant deux sections, correspondant à des portions où aucun faisceau laser n'atteindrait effectivement la couche 150 de poudre en l'absence de modulation car au moment correspondant aucun faisceau laser n'est émis ou n'atteint le dispositif de balayage 130.

Au moins deux sections, par exemple deux sections successives, peuvent être séparée d'un écartement, dit écartement vecteur. Les sections successives de la trajectoire principale sont par exemple séparées par un même écartement. L'écartement est par exemple supérieur à 100 µm, par exemple supérieur à 200 µm, par exemple supérieur à 400 µm, par exemple inférieur à 1000 µm, par exemple inférieur à 700 µm, par exemple égal à 500 µm. L'appareil comprenant le dispositif de modulation permet une augmentation de l'écartement vecteur par rapport à l'art antérieur et donc une plus grande efficacité en réduisant la longueur de la trajectoire principale et donc le temps de fabrication.

Le dispositif de balayage 130 peut comprendre une tête de balayage trois axes. L'appareil 1 peut alors comprendre de préférence l'élément optique de pilotage de la longueur de focalisation 1101 et/ou le dispositif de focalisation 1102 décrits ci-avant.

Le dispositif de balayage 130 peut comprendre une tête de balayage deux axes. L'appareil 1 peut alors comprendre de préférence un dispositif de focalisation entre le dispositif de balayage 130 et la couche 150. Le dispositif de focalisation comprend par exemple une lentille, par exemple une lentille à champ plat, par exemple une lentille F-Thêta.

### Dispositif de modulation

Le dispositif de modulation 120 peut être adapté pour modifier l'orientation du miroir de modulation 121, par exemple par rotation, par exemple selon au moins un axe de rotation, sur une plage de valeurs d'angles de modulation. Le dispositif de modulation 120 peut être adapté pour modifier l'orientation du miroir de modulation 121, par exemple selon un premier axe de rotation 122 de modulation, par exemple sur une première plage de valeurs de modulation. En complément, le dispositif de modulation 120 peut être adapté pour modifier l'orientation du miroir de modulation 121 selon un deuxième axe de rotation 123 de modulation, par exemple sur une deuxième plage de valeurs de modulation. Le premier axe de rotation 122 de modulation et le deuxième axe de rotation 123 de modulation peuvent être deux axes orthogonaux.

La première plage de valeurs de modulation et/ou la deuxième plage de valeur de modulation a par exemple une amplitude comprise entre +/- 0,0025 rad et +/- 0,0015 rad, par exemple de +/- 0,002 rad.

La plage de valeurs d'angles de balayage peut être plus étendue que la plage de valeurs d'angles de modulation. La première et/ou deuxième plage(s) de valeurs d'angles de balayage peut être plus étendue que la première et/ou deuxième plage(s) de valeurs d'angles de modulation. En effet, les modulations visent à moduler le balayage qui détermine la trajectoire principale, par exemple en imposant une trajectoire secondaire qui est superposée à la trajectoire principale résultant de la commande du dispositif de balayage 130.

Le dispositif de modulation 120 peut être configuré pour modifier l'orientation du miroir de modulation 121 selon le premier axe de rotation 122 de modulation et/ou le deuxième axe de rotation 123 de modulation, à une vitesse de rotation de modulation. La vitesse de rotation de balayage peut être plus basse que la vitesse de rotation de modulation. En effet, le dispositif de modulation permet ainsi d'offrir une plus grande réactivité.

Le dispositif de modulation 120 peut comprendre au moins un actionneur, par exemple pour modifier l'orientation du miroir de modulation 121. Le dispositif de modulation 120 peut ainsi comprendre un premier actionneur pour modifier l'orientation du miroir de modulation selon le premier axe de rotation 122 de modulation et un deuxième actionneur pour modifier l'orientation du miroir de modulation selon le deuxième axe de rotation 123 de modulation.

L'au moins un actionneur, par exemple le premier actionneur et/ou le deuxième actionneur, peut être ou comprendre un actionneur piézo-électrique, par exemple adapté pour osciller au moins à une fréquence d'oscillation supérieure ou égale à 1 kHz, par exemple supérieure à 1,5 kHz, par exemple supérieure à 2 kHz, par exemple inférieure à 15 kHz, par exemple inférieure à 12 kHz, par exemple comprise entre 1,5 et 10 kHz. Un tel actionneur permet d'atteindre des fréquences élevées, tout en étant compact, et peu coûteux. Par ailleurs, un tel actionneur permet une grande précision angulaire sur la position pendant la modulation, c'est-à-dire une maîtrise de l'amplitude, et sur le retour à une position de référence correspondant à une absence de modulation.

L'au moins un actionneur, par exemple le premier actionneur et/ou le deuxième actionneur, peut être ou comprendre un actionneur électromagnétique ou mécanique.

L'au moins un actionneur, par exemple le premier actionneur et/ou le deuxième actionneur, peut être ou comprendre un microsystème électromécanique, aussi appelé MEMS (« microelectromechanical systems » en terminologie anglo-saxonne), par exemple adapté pour osciller au moins à une fréquence d'oscillation supérieure à 10 kHz, par exemple supérieure à 15 kHz, par exemple égale à 20 kHz. Une fréquence de modulation aussi élevée permet d'augmenter la vitesse de balayage principale en conservant une densité satisfaisante de motif sur la couche.

L'au moins un actionneur, par exemple le premier actionneur et/ou le deuxième actionneur, peut être ou comprendre un galvanomètre.

L'angle α d'incidence du faisceau laser issu de la source laser sur le miroir 121 peut être compris entre 25 et 35 °, et/ou l'angle formé entre le faisceau laser issu de la source laser et dirigé vers le dispositif 120 et le faisceau laser issu du dispositif 120 et dirigé vers le dispositif de balayage 130 peut être compris entre 50 et 70°.

Le faisceau laser peut avoir un diamètre compris entre 20 et 40 mm lorsqu'il se reflète sur le miroir de modulation, par exemple environ 23 mm de diamètre et/ou un diamètre compris entre 50 et 100 µm au niveau de la surface de la couche de poudre.

Pour un angle α d'incidence de 45°, pour un faisceau laser de d'environ 30 mm de diamètre lorsqu'il se reflète sur le miroir de modulation, le miroir de modulation doit présenter une zone de réflexion elliptique d'au moins 42 mm de longueur et 30 mm de largeur. Au contraire, pour un angle d'incidence de 30°, le miroir de modulation peut présenter une zone de réflexion elliptique de 35 mm de longueur et 30 mm de largeur. La masse associée s'en trouve donc réduite de l'ordre de 18%.

L'angle d'incidence du faisceau laser issu de la source laser sur le miroir de modulation peut être compris entre 28 et 32°, par exemple égal à 30°.

Le miroir de modulation 121 peut être un miroir, par exemple un miroir plan, de forme, par exemple de forme de découpe, elliptique. Une telle forme est particulièrement adaptée pour limiter la quantité de matière, ce qui permet une oscillation rapide, sans limiter la zone pouvant être atteinte par le laser sur la surface de la couche de poudre.

Le miroir de forme elliptique a par exemple une longueur comprise entre D_{f} /cos(α) et 2 D_{f} /cos(α), où D_{f} est le diamètre du faisceau laser et α l'angle d'incidence du faisceau laser issu de la source laser sur le miroir de modulation, par exemple égal à 1,6 D_{f} /cos(α). Le miroir a par exemple une largeur comprise entre D_{f} et 1,1 D_{f}, par exemple égale à Df. D_{f} est par exemple le diamètre du faisceau laser à 1/e², ou D86 à 86% de l'énergie d'un spot gaussien.

Alternativement, le miroir de modulation 121 peut être un miroir rectangulaire, par exemple carré, ou un miroir circulaire.

Le miroir de modulation 121 peut comprendre un substrat et un revêtement de surface de réflexion. Un tel revêtement permet d'améliorer la réflexion des photons sur le miroir. Un tel revêtement permet d'éviter ou de limiter l'absorption de l'énergie du faisceau laser par le miroir, évite ou limite l'échauffement du miroir, l'échauffement entrainant une déformation et diminuant la qualité du faisceau. Un tel revêtement permet ainsi d'augmenter la durée de vie du miroir de modulation. Le miroir de modulation 121 comprend par exemple du carbure de silicium. Le miroir comprend par exemple un substrat, le substrat étant par exemple en carbure de silicium et/ou est constitué essentiellement de carbure de silicium. Le carbure de silicium offre de bonnes performances en termes de masse/rigidité, sans présenter des inconvénients propres à des matériaux tels que le bérylium, par exemple la toxicité et la difficulté d'approvisionnement, ainsi que le coût d'approvisionnement. Il est ainsi possible de réduire encore la masse et donc l'inertie du miroir de modulation, et donc d'augmenter davantage la fréquence d'oscillation du ou des actionneurs du dispositif de modulation 120.

Le dispositif de modulation 120 peut être adapté pour moduler la trajectoire selon une modulation. Le dispositif de modulation 120 peut ainsi être adapté pour imposer au faisceau laser, ou diriger le faisceau laser selon, une trajectoire de modulation ou trajectoire secondaire venant se superposer à la trajectoire principale au niveau d'au moins une partie de la couche 150 de poudre de fabrication additive.

Le miroir de modulation 121 peut être adapté pour osciller, par exemple selon au moins un axe, par exemple selon deux axes, par exemple selon le premier axe de rotation 122 de modulation et/ou selon le deuxième axe de rotation 123 de modulation. Le miroir de modulation 121 peut ainsi être adapté pour osciller de manière simultanée et/ou indépendante selon les deux axes, par exemple selon le premier axe de rotation 122 de modulation et/ou selon le deuxième axe de rotation 123 de modulation.

Le miroir de modulation 121 peut ainsi être adapté pour osciller selon des premières oscillations selon le premier axe de rotation 122 de modulation et/ou selon des deuxièmes oscillations selon le deuxième axe de rotation 123 de modulation. Le miroir de modulation 121 peut être adapté pour osciller simultanément selon des premières oscillations selon le premier axe de rotation 122 de modulation et selon des deuxièmes oscillations selon le deuxième axe de rotation 123 de modulation, par exemple pour générer un motif sinusoïdal ou circulaire. Les oscillations selon le premier axe de rotation 122 de modulation et/ou selon le deuxième axe de rotation 123 de modulation pouvant être pilotées en amplitude et/ou en fréquence, par exemple de manière indépendante entre les deux axes 122 et 123.

Les oscillations selon le premier axe de rotation 122 de modulation peuvent être pilotées de manière à présenter un déphasage vis-à-vis des oscillations selon le deuxième axe de rotation 123. La maîtrise du déphasage permet par exemple d'ajuster la forme du motif, de changer de forme de motif et/ou d'orienter le motif suivant la direction de balayage.

Les oscillations permettent par exemple des oscillations résultantes, par exemple propres à la trajectoire secondaire, au niveau de la couche 150 de poudre, d'amplitude supérieure à 100 µm, par exemple supérieure à 200 µm, par exemple inférieure à 2000 µm, par exemple inférieure à 1000 µm, par exemple inférieure à 750 µm, par exemple égale à 500 µm. Les oscillations peuvent permettre d'augmenter la largeur du bain de fusion pour une même vitesse de déplacement du spot et une même fluence. Il est ainsi possible d'augmenter l'écartement vecteur et donc la productivité surfacique de manière proportionnelle.

Le miroir de modulation peut être adapté pour osciller à une fréquence supérieure à 1,5 kHz, de préférence supérieure à 2,5 kHz, de préférence supérieure ou égale à 10 kHz, par exemple selon le premier axe de rotation de modulation 122 et/ou le deuxième axe de rotation de modulation 123. La modulation peut comprendre motif, par exemple un motif périodique, par exemple répété à une fréquence supérieure à 1,5 kHz, de préférence supérieure à 2,5 kHz, de préférence supérieure ou égale à 10 kHz. Le motif est par exemple une oscillation. La modulation peut former un motif. Il est ainsi possible à l'aide du dispositif de modulation, d'introduire des modulations.

La trajectoire secondaire peut comprendre un motif, par exemple de sorte à superposer un motif à la trajectoire principale au niveau de la surface de la partie de couche de poudre.

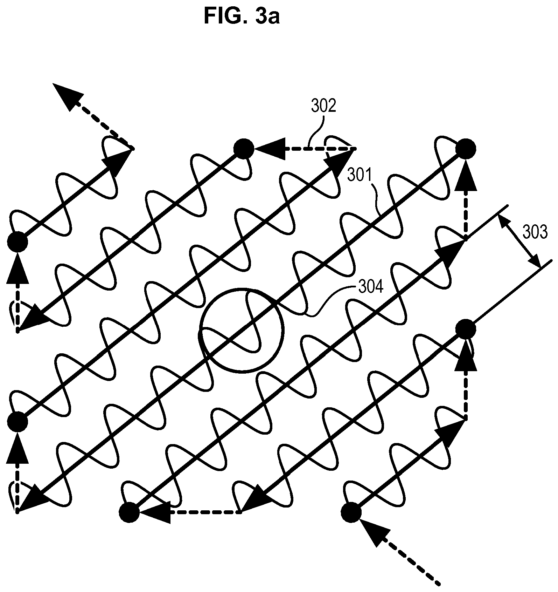

En référence aux figures 3a à 3c, un exemple de motif est illustré. Le motif est une sinusoïde.

Sur la figure 3a, les éléments en gras représentent la trajectoire principale comprenant des sections 301 séparées par un écartement 303 et des sauts 302, alors que les éléments en trait fin représentent la trajectoire modulée après superposition de la trajectoire secondaire de sorte à présenter des oscillations sinusoïdales et parcourues par le spot laser 304.

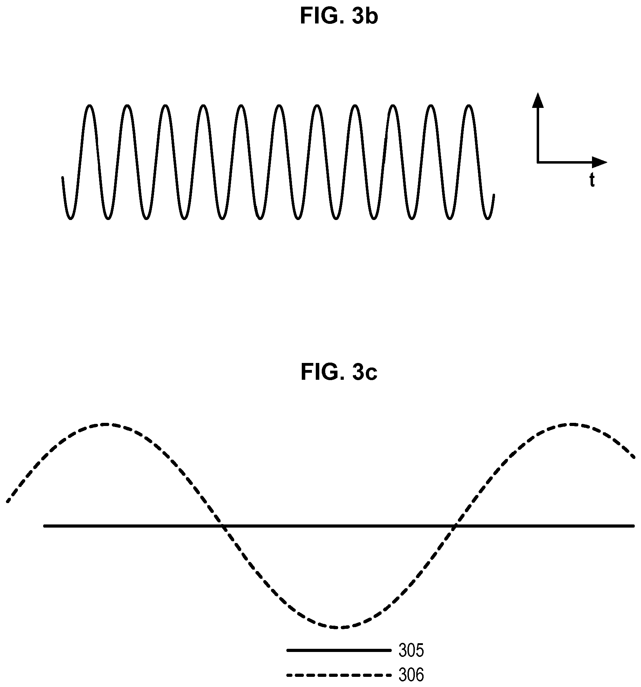

Sur la figure 3b, la trajectoire secondaire ou de modulation correspondante est représentée en tant que variation selon un axe en fonction du temps.

La figure 3c détaille la trajectoire secondaire entre la commande associée au premier axe de rotation de modulation 305 et la commande associée au deuxième axe de rotation de modulation 306, en fonction du temps. Dans l'exemple, le miroir de modulation oscille uniquement autour du deuxième axe de rotation de modulation.

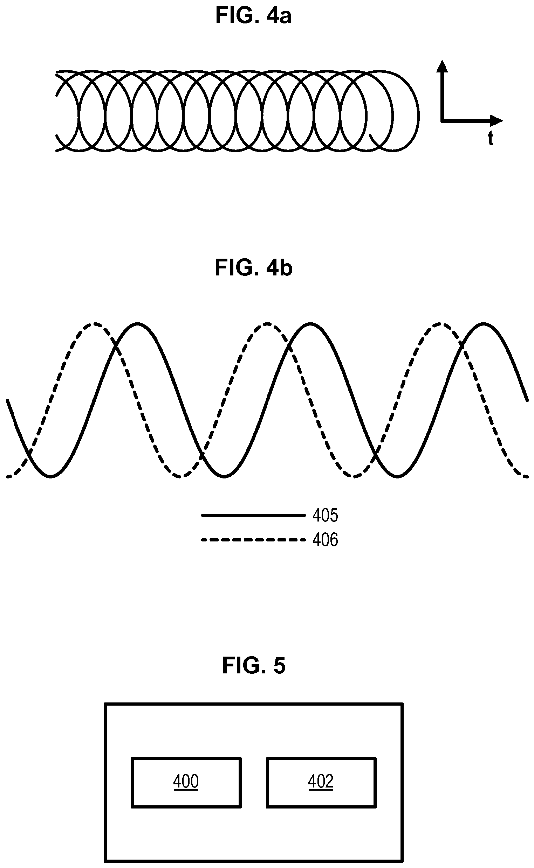

En référence aux figures 4a et 4b, un exemple de motif est illustré. Le motif est circulaire.

Sur la figure 4a, la trajectoire secondaire ou de modulation correspondante est représentée en tant que variation selon un axe en fonction du temps.

La figure 4b détaille la trajectoire secondaire entre la commande associée au premier axe de rotation de modulation 405 et la commande associée au deuxième axe de rotation de modulation 406, en fonction du temps. Dans l'exemple, le miroir de modulation oscille à la fois autour du premier axe de rotation de modulation et autour du deuxième axe de rotation de modulation.

La source laser 110, le dispositif de modulation 120 et le dispositif de balayage 130 sont par exemple agencés de sorte à permettre un débit de fusion surfacique, c'est-à-dire la surface de la couche de poudre couverte par le spot laser par unité de temps, supérieur à 1000 cm²/min, par exemple supérieur à 2000 cm²/min, par exemple supérieur à 4000 cm²/min, par exemple inférieur à 15000 cm²/min, par exemple inférieur à 10000 cm²/min, par exemple de l'ordre de 6000 cm²/min. L'appareil selon l'invention, de par la présence du dispositif de modulation, permet une augmentation drastique du débit de fusion surfacique et donc de la productivité surfacique.

Le dispositif de modulation 120 et le dispositif de balayage 130 sont par exemple agencés de sorte à permettre de sorte que la vitesse de déplacement du spot laser est comprise entre 0,5 et 10 m/s, par exemple entre 1 et 5 m/s, par exemple égale à 1 ou 2 m/s.

Le miroir de modulation 121 peut être disposé au niveau d'une partie convergente du faisceau laser issu de la source laser 110, par exemple en aval du dispositif de focalisation 1102 lorsque le dispositif de balayage 130 comprend une tête de balayage trois axes. Il est ainsi possible de limiter la perturbation de la qualité du faisceau laser. En effet, le faisceau laser en sortie de l'élément optique de pilotage de la longueur de focalisation 1101 est divergent et ne devient convergent qu'en sortie du dispositif de focalisation 1102. Placer le dispositif de modulation 120 ailleurs, en particulier plus en amont, risquerait de perturber le fonctionnement optique en décentrant le faisceau laser.

### Couche et support

Le support comprend par exemple un plateau destiné à être déplacé au fur et à mesure de l'ajout de couches.

La ou chaque couche 150 de poudre a par exemple une épaisseur comprise entre 10 et 100 µm, par exemple entre 20 et 60 µm, par exemple égale à 40 µm.

Le matériau de la ou chaque couche 150 de poudre a par exemple une fluence comprise entre 0,5 et 10 J/mm², par exemple comprise entre 1 et 5 J/mm², par exemple égale à 2 J/mm².

Le matériau de la ou chaque couche 150 de poudre peut comprendre du titane et/ou de l'aluminium et/ou de l'inconel et ou de l'acier inoxydable et/ou de l'acier maraging. Le matériau de la ou chaque couche 150 de poudre peut être constitué de titane et/ou d'aluminium et/ou d'inconel et ou d'acier inoxydable et/ou d'acier maraging.

### Autre source

En plus de la source 110 laser, l'appareil peut comprendre une deuxième source. La deuxième source peut être une source de faisceau de particules, par exemple d'un faisceau d'électrons, par exemple une source EBM (« Electron Beam Melting » selon la terminologie anglo-saxonne généralement utilisée dans le domaine), par exemple un canon à électrons.

L'appareil 1 peut ainsi être un appareil hybride, comprenant plusieurs sources d'énergie pour réaliser la fusion sélective. La deuxième source peut former une source primaire d'énergie adaptée pour réaliser la fusion sélective au niveau du cœur de l'objet. La source 110 laser peut former une source secondaire d'énergie adaptée pour réaliser la fusion sélective au niveau de zones de périphérie, par exemple de peau ou de bordure de l'objet.

De cette façon, il est possible d'obtenir un objet présentant des propriétés mécaniques ou métallographiques différentes au niveau de sa périphérie, et dans son volume.

L'appareil 1 peut comprendre en outre une ou plusieurs autres sources 110 laser, par exemple telles que la source laser décrite plus haut. Une ou plusieurs autres sources 110 laser, par exemple chaque autre source 110 laser, peut être équipée d'un dispositif de balayage 130, par exemple un dispositif de balayage 130 tel que décrit plus haut, et/ou d'un dispositif de modulation 120, par exemple un dispositif de modulation 120 tel que décrit plus haut. Il est ainsi possible de fabriquer des pièces de grandes dimensions via un support et des couches de poudre de grandes dimensions, en mettant en œuvre plusieurs sources laser et/ou dispositif de balayage et/ou dispositif de modulation en parallèle pour traiter des zones différentes de la couche ou des couches de poudre.

### Moyens de commande

L'appareil 1 peut comprendre des moyens de commande adaptés pour commander l'appareil, par exemple pour commander la source laser 110 et/ou le dispositif de modulation 120 et/ou le dispositif de balayage 130.

Les moyens de commande comprennent ou forment par exemple une unité de commande.

Les moyens de commande comprennent par exemple des moyens de stockage de données, par exemple une unité de stockage de données, par exemple une mémoire vive et/ou une mémoire morte. Les moyens de stockage peuvent être adaptés pour stocker des instructions correspondant au procédé décrit ci-après.

Les moyens de commande comprennent par exemple des moyens de calcul, par exemple un processeur.

Les moyens de commande peuvent être configurés pour mettre en œuvre un procédé tel que décrit ci-après.

### Procédé

En référence à la figure 5, il est décrit un procédé de fabrication d'un objet tridimensionnel par fabrication additive sélective.

Le procédé peut être mis en œuvre au moyen de l'appareil 1.

Le procédé peut comprendre une étape 400 de contrôle du dispositif de balayage 130 selon une commande de balayage d'au moins une partie de la couche 150 de poudre de fabrication additive selon la trajectoire de balayage ou trajectoire principale.

Le procédé peut comprendre une étape 402, mise en œuvre en même temps que le contrôle du dispositif de balayage de l'étape 400, de contrôle du dispositif de modulation 120 selon une commande de modulation de la trajectoire de balayage. La commande de modulation de la trajectoire de balayage correspond par exemple à la trajectoire secondaire ou trajectoire de modulation.

Les étapes 400 et 402 peuvent être mises en œuvre de sorte que le faisceau laser suit au niveau de la couche 150 de poudre une trajectoire de balayage modulée. La trajectoire de balayage modulée peut correspondre à la superposition de la trajectoire de modulation à la trajectoire de balayage.

Dans l'étape 400 de contrôle du dispositif de balayage 130, le dispositif de balayage peut être contrôlé de sorte à modifier l'orientation du premier miroir de balayage 131 et/ou du deuxième miroir de balayage 132 selon le deuxième axe de rotation 134 de balayage à une vitesse de rotation de balayage. Dans l'étape 402 de contrôle du dispositif de modulation 120, le dispositif de modulation 120 peut être contrôlé de sorte à modifier l'orientation du miroir de modulation 121 selon le premier axe de rotation et/ou deuxième axe(s) de rotation, respectivement 122 et/ou 123, de modulation à la vitesse de rotation de modulation. La vitesse de rotation de balayage peut être plus basse que la vitesse de rotation de modulation.

### Exemples détaillés

Pour un diamètre de spot de 70 µm, une vitesse de déplacement de spot de 2 m/s, une épaisseur de couche de 40 µm, une fluence de 2 J/mm², un exemple d'appareil selon l'art antérieur dépourvu du dispositif de modulation 120 nécessiterait un écartement de 50 µm et serait limité à une puissance laser de 200 W, de sorte qu'il atteindrait un débit de fusion surfacique de 600 cm²/min, alors qu'un exemple d'appareil tel que l'appareil décrit, qui comprend le dispositif de modulation 120, peut par exemple permettre un écartement de 500 µm et une largeur d'oscillations de trajectoire secondaire de 500 µm, et exploiter une puissance laser plus importante, par exemple de 1000 à 2000 W, permettant un débit de fusion surfacique de 3000 à 6000 cm²/min et une productivité surfacique ainsi améliorée par un rapport de 5 à 10.

## Revendications

1. Appareil pour fabriquer un objet tridimensionnel par fabrication additive sélective, comprenant :
- un support (140) adapté pour supporter au moins une couche (150) de poudre de fabrication additive,
- une source (110) laser adaptée pour émettre un faisceau laser (111),
- un dispositif de balayage (130) adapté pour diriger le faisceau laser sur la couche de poudre de sorte à balayer au moins une partie de la couche de poudre,
- un dispositif de modulation (120) de trajectoire de balayage, disposé en amont du dispositif de balayage, le dispositif de modulation comprenant un miroir de modulation (121) adapté pour réfléchir le faisceau laser issu de la source laser et le diriger vers le dispositif de balayage, **caractérisé en ce que** l'angle d'incidence du faisceau laser issu de la source laser sur le miroir de modulation est compris entre 20 et 45°,
et **en ce que** le dispositif de modulation (120) est adapté pour modifier l'orientation du miroir de modulation selon un premier axe de rotation (122) de modulation et selon un deuxième axe de rotation (123) de modulation.

2. Appareil selon la revendication 1, dans lequel le dispositif de balayage (130) comprend un premier miroir de balayage (131) et/ou un deuxième miroir de balayage (132), le dispositif de balayage étant adapté pour modifier l'orientation du premier miroir de balayage selon un premier axe de rotation (133) de balayage et/ou du deuxième miroir de balayage selon un deuxième axe de rotation (134) de balayage.

3. Appareil selon la revendication 2, dans lequel le dispositif de balayage est adapté pour modifier l'orientation du premier miroir de balayage (131) selon le premier axe de rotation (133) de balayage sur une première plage de valeurs d'angles de balayage et/ou du deuxième miroir de balayage (132) selon le deuxième axe de rotation (134) de balayage sur une deuxième plage de valeurs d'angles de balayage,
dans lequel le dispositif de modulation (120) est adapté pour modifier l'orientation du miroir de modulation selon le premier axe de rotation (122) de modulation sur une première plage de valeurs d'angles de modulation et le deuxième axe de rotation (123) de modulation sur une deuxième plage de valeurs d'angles de modulation,
la première et/ou deuxième plage(s) de valeurs d'angles de balayage étant plus étendue que la première et/ou deuxième plage(s) de valeurs d'angles de modulation.

4. Appareil selon la revendication 2 ou 3, dans lequel le dispositif de balayage (130) est configuré pour modifier l'orientation du premier miroir de balayage (131) selon le premier axe de rotation (133) de balayage et/ou du deuxième miroir de balayage (132) selon le deuxième axe de rotation (134) de balayage, à une vitesse de rotation de balayage,
dans lequel le dispositif de modulation (120) est configuré pour modifier l'orientation du miroir de modulation (121) selon le premier axe de rotation (122) de modulation et le deuxième axe de rotation (123) de modulation, à une vitesse de rotation de modulation,
la vitesse de rotation de balayage étant plus basse que la vitesse de rotation de modulation.

5. Appareil selon l'une quelconque des revendications 2 à 4, dans lequel le dispositif de balayage comprend le premier miroir de balayage (131) et le deuxième miroir de balayage (132), le premier miroir de balayage étant adapté pour réfléchir le faisceau laser issu du miroir de modulation (121) et le diriger vers le deuxième miroir de balayage, le deuxième miroir de balayage étant adapté pour réfléchir le faisceau laser issu du premier miroir de balayage et le diriger sur la couche (150) de poudre de fabrication additive, le système étant adapté pour contrôler l'orientation du premier miroir de balayage selon le premier axe de rotation de balayage et du deuxième miroir selon le deuxième axe de rotation de balayage pour contrôler la trajectoire de balayage de la couche de poudre par le faisceau laser selon deux degrés de liberté dans un plan de la couche de poudre.

6. Appareil selon l'une quelconque des revendications 1 à 5, dans lequel le dispositif de modulation (120) est adapté pour moduler la trajectoire selon une modulation comprenant une oscillation à une fréquence supérieure à 1,5 kHz, de préférence supérieure ou égale à 10 kHz.

7. Appareil selon l'une quelconque des revendications 1 à 6, dans lequel l'angle d'incidence du faisceau laser issu de la source laser sur le miroir de modulation est compris entre 25 et 35°.

8. Appareil selon l'une quelconque des revendications 1 à 7, dans lequel le miroir de modulation (121) comprend du carbure de silicium.

9. Appareil selon l'une quelconque des revendications 1 à 8, dans lequel le miroir de modulation (121) est un miroir de forme elliptique.

10. Procédé de fabrication d'un objet tridimensionnel par fabrication additive sélective, mis en œuvre au moyen de l'appareil selon l'une quelconque des revendications précédentes, comprenant les étapes suivantes :
- contrôle du dispositif de balayage (130) selon une commande de balayage d'au moins une partie de la couche (150) de poudre de fabrication additive selon une trajectoire de balayage, et
- en même temps que le contrôle du dispositif de balayage, contrôle du dispositif de modulation (120) selon une commande de modulation de la trajectoire de balayage,
de sorte que le faisceau laser suit au niveau de la couche (150) de poudre une trajectoire de balayage modulée.

11. Procédé selon la revendication 10, dans lequel :
- dans l'étape de contrôle du dispositif de modulation (120), le dispositif de modulation est contrôlé de sorte à modifier l'orientation du miroir de modulation (121) selon le premier et/ou deuxième axe(s) de rotation (122, 123) de modulation à une vitesse de rotation de modulation,
- dans l'étape de contrôle du dispositif de balayage (130), le dispositif de balayage est contrôlé de sorte à modifier l'orientation du premier miroir de balayage (131) selon le premier axe de rotation (133) de balayage et/ou du deuxième miroir de balayage (132) selon le deuxième axe de rotation (134) de balayage, à une vitesse de rotation de balayage plus basse que la vitesse de rotation de modulation.

## Patentansprüche

1. Vorrichtung zum Fertigen eines dreidimensionalen Objekts durch selektive additive Fertigung, umfassend:
- einen Träger (140), der zum Tragen mindestens einer Schicht (150) aus Pulver für die additive Fertigung angepasst ist,
- eine Laserquelle (110), die zum Emittieren eines Laserstrahls (111) angepasst ist,
- eine Abtastvorrichtung (130), die zum Richten des Laserstrahls auf die Pulverschicht angepasst ist, um mindestens einen Teil der Pulverschicht abzutasten,
- eine Abtastbahnmodulationsvorrichtung (120), die stromaufwärts der Abtastvorrichtung angeordnet ist, die Modulationsvorrichtung umfassend einen Modulationsspiegel (121), der zum Reflektieren des Laserstrahls, der von der Laserquelle kommt, und Richten davon zu der Abtastvorrichtung angepasst ist,
**dadurch gekennzeichnet, dass**
der Einfallswinkel des Laserstrahls, der von der Laserquelle kommt, auf den Modulationsspiegel zwischen 20 und 45° beträgt, **und dass** die Modulationsvorrichtung (120) zum Modifizieren der Ausrichtung des Modulationsspiegels entlang einer ersten Modulationsdrehachse (122) und entlang einer zweiten Modulationsdrehachse (123) angepasst ist.

2. Vorrichtung nach Anspruch 1, wobei die Abtastvorrichtung (130) einen ersten Abtastspiegel (131) und/oder einen zweiten Abtastspiegel (132) umfasst, wobei die Abtastvorrichtung zum Modifizieren der Ausrichtung des ersten Abtastspiegels entlang einer ersten Abtastdrehachse (133) und/oder des zweiten Abtastspiegels entlang einer zweiten Abtastdrehachse (134) angepasst ist.

3. Vorrichtung nach Anspruch 2, wobei die Abtastvorrichtung zum Modifizieren der Ausrichtung des ersten Abtastspiegels (131) entsprechend der ersten Abtastdrehachse (133) über einen ersten Bereich von Abtastwinkelwerten und/oder des zweiten Abtastspiegels (132) entsprechend der zweiten Abtastdrehachse (134) über einen zweiten Bereich von Abtastwinkelwerten angepasst ist,
wobei die Modulationsvorrichtung (120) zum Modifizieren der Ausrichtung des Modulationsspiegels entsprechend der ersten Modulationsdrehachse (122) über einen ersten Bereich von Modulationswinkelwerten und der zweiten Modulationsdrehachse (123) über einen zweiten Bereich von Modulationswinkelwerten angepasst ist,
wobei der erste und/oder zweite Bereich von Abtastwinkelwerten breiter als der erste und/oder zweite Bereich von Modulationswinkelwerten ist.

4. Vorrichtung nach Anspruch 2 oder 3, wobei die Abtastvorrichtung (130) zum Modifizieren der Ausrichtung des ersten Abtastspiegels (131) entlang der ersten Abtastdrehachse (133) und/oder des zweiten Abtastspiegels (132) entlang der zweiten Abtastdrehachse (134) mit einer Abtastdrehgeschwindigkeit angepasst ist,
wobei die Modulationsvorrichtung (120) zum Modifizieren der Ausrichtung des Modulationsspiegels (121) entsprechend der ersten Modulationsdrehachse (122) und der zweiten Modulationsdrehachse (123) mit einer Modulationsdrehgeschwindigkeit angepasst ist,
wobei die Abtastdrehgeschwindigkeit niedriger als die Modulationsdrehgeschwindigkeit ist.

5. Vorrichtung nach einem der Ansprüche 2 bis 4, wobei die Abtastvorrichtung den ersten Abtastspiegel (131) und den zweiten Abtastspiegel (132) umfasst, wobei der erste Abtastspiegel zum Reflektieren des Laserstrahls, der von dem Modulationsspiegel (121) kommt, und Richten davon zu dem zweiten Abtastspiegel angepasst ist, wobei der zweite Abtastspiegel zum Reflektieren des Laserstrahls, der von dem ersten Abtastspiegel kommt, und Richten davon auf die Schicht (150) aus Pulver für die additive Fertigung angepasst ist, wobei das System zum Steuern der Ausrichtung des ersten Abtastspiegels entlang der ersten Abtastdrehachse und des zweiten Spiegels entlang der zweiten Abtastdrehachse zum Steuern der Abtastbahn der Pulverschicht durch den Laserstrahl entsprechend zwei Freiheitsgraden in einer Ebene der Pulverschicht angepasst ist.

6. Vorrichtung nach einem der Ansprüche 1 bis 5, wobei die Modulationsvorrichtung (120) zum Modulieren der Bahn entsprechend einer Modulation angepasst ist, umfassend eine Schwingung mit einer Frequenz größer als 1,5 kHz, vorzugsweise größer als oder gleich 10 kHz.

7. Vorrichtung nach einem der Ansprüche 1 bis 6, wobei der Einfallswinkel des Laserstrahls, der von der Laserquelle kommt, auf den Modulationsspiegel zwischen 25 und 35° beträgt.

8. Vorrichtung nach einem der Ansprüche 1 bis 7, wobei der Modulationsspiegel (121) Siliziumkarbid umfasst.

9. Vorrichtung nach einem der Ansprüche 1 bis 8, wobei der Modulationsspiegel (121) ein ellipsenförmiger Spiegel ist.

10. Verfahren zum Fertigen eines dreidimensionalen Objekts durch selektive additive Fertigung, das mittels der Vorrichtung nach einem der vorstehenden Ansprüche implementiert wird, umfassend die folgenden Schritte:
- Steuern der Abtastvorrichtung (130) entsprechend einem Abtastbefehl von mindestens einem Teil der Schicht (150) aus Pulver für die additive Fertigung entsprechend einer Abtastbahn, und
- gleichzeitig mit dem Steuern der Abtastvorrichtung, Steuern der Modulationsvorrichtung (120) entsprechend einem Modulationsbefehl der Abtastbahn,
sodass der Laserstrahl auf der Pulverschicht (150) einer modulierten Abtastbahn folgt.

11. Verfahren nach Anspruch 10, wobei:
- bei dem Schritt des Steuerns der Modulationsvorrichtung (120) die Modulationsvorrichtung so gesteuert wird, dass die Ausrichtung des Modulationsspiegels (121) entsprechend der ersten und/oder der zweiten Modulationsdrehachse (122, 123) mit einer Modulationsdrehgeschwindigkeit modifiziert wird,
- bei dem Schritt des Steuerns der Abtastvorrichtung (130) die Abtastvorrichtung so gesteuert wird, dass die Ausrichtung des ersten Abtastspiegels (131) entlang der ersten Abtastdrehachse (133) und/oder des zweiten Abtastspiegels (132) entlang der zweiten Abtastdrehachse (134) mit einer Abtastdrehgeschwindigkeit modifiziert wird, die niedriger als die Modulationsdrehgeschwindigkeit ist.

## Claims

1. Apparatus for manufacturing a three-dimensional object by selective additive manufacturing, comprising:
- a substrate (140) suitable for supporting at least one layer (150) of additive manufacturing powder,
- a laser source (110) suitable for emitting a laser beam (111),
- a scanning device (130) suitable for directing the laser beam onto the powder layer so as to scan at least part of the powder layer,
- a scanning path modulation device (120) arranged upstream of the scanning device, the modulation device comprising a modulation mirror (121) suitable for reflecting the laser beam from the laser source and directing it towards the scanning device, **characterized in that**
the angle of incidence of the laser beam from the laser source on the modulation mirror is between 20 and 45°, **and in that** the modulation device (120) is suitable for changing the orientation of the modulation mirror along a first modulation rotational axis (122) and along a second modulation rotational axis (123).

2. Apparatus according to claim 1, wherein the scanning device (130) comprises a first scanning mirror (131) and/or a second scanning mirror (132), the scanning device being suitable for changing the orientation of the first scanning mirror along a first scanning rotational axis (133) and/or of the second scanning mirror along a second scanning rotational axis (134).

3. Apparatus according to claim 2, wherein the scanning device is suitable for changing the orientation of the first scanning mirror (131) along the first scanning rotational axis (133) over a first range of scanning angle values and/or of the second scanning mirror (132) along the second scanning rotational axis (134) over a second range of scanning angle values,
wherein the modulation device (120) is suitable for changing the orientation of the modulation mirror along the first modulation rotational axis (122) over a first range of modulation angle values and the second modulation rotational axis (123) over a second range of modulation angle values,
the first and/or second range(s) of scanning angle values being wider than the first and/or second range(s) of modulation angle values.

4. Apparatus according to either claim 2 or claim 3, wherein the scanning device (130) is designed to change the orientation of the first scanning mirror (131) along the first scanning rotational axis (133) and/or of the second scanning mirror (132) along the second scanning rotational axis (134), at a scanning rotational speed,
wherein the modulation device (120) is designed to change the orientation of the modulation mirror (121) along the first modulation rotational axis (122) and the second modulation rotational axis (123) at a modulation rotational speed,
the scanning rotational speed being lower than the modulation rotational speed.

5. Apparatus according to any of claims 2 to 4, wherein the scanning device comprises the first scanning mirror (131) and the second scanning mirror (132), the first scanning mirror being suitable for reflecting the laser beam from the modulation mirror (121) and directing it towards the second scanning mirror, the second scanning mirror being suitable for reflecting the laser beam from the first scanning mirror and directing it onto the additive manufacturing powder layer (150), the system being suitable for controlling the orientation of the first scanning mirror along the first scanning rotational axis and of the second mirror along the second scanning rotational axis in order to control the path for the scanning of the powder layer by the laser beam according to two degrees of freedom in a plane of the powder layer.

6. Apparatus according to any of claims 1 to 5, wherein the modulation device (120) is suitable for modulating the path according to a modulation comprising an oscillation at a frequency greater than 1.5 kHz, preferably greater than or equal to 10 kHz.

7. Apparatus according to any of claims 1 to 6, wherein the angle of incidence of the laser beam from the laser source on the modulation mirror is between 25 and 35°.

8. Apparatus according to any of claims 1 to 7, wherein the modulation mirror (121) comprises silicon carbide.

9. Apparatus according to any of claims 1 to 8, wherein the modulation mirror (121) is an elliptically shaped mirror.

10. Method for manufacturing a three-dimensional object by selective additive manufacturing, implemented by means of the apparatus according to any of the preceding claims, comprising the following steps:
- controlling the scanning device (130) according to a command for scanning at least part of the additive manufacturing powder layer (150) along a scanning path, and
- at the same time as controlling the scanning device, controlling the modulation device (120) according to a scanning path modulation command,
so that the laser beam follows a modulated scanning path over the powder layer (150).

11. Method according to claim 10, wherein:
- in the step of controlling the modulation device (120), the modulation device is controlled so as to change the orientation of the modulation mirror (121) along the first and/or second modulation rotational axis(es) (122, 123) at a modulation rotational speed,
- in the step of controlling the scanning device (130), the scanning device is controlled so as to change the orientation of the first scanning mirror (131) along the first scanning rotational axis (133) and/or of the second scanning mirror (132) along the second scanning rotational axis (134), at a scanning rotational speed lower than the modulation rotational speed.
